# EUROPEAN PATENT APPLICATION

(11) **EP 2 661 105 A2**
(43) Date of publication of application: **06.11.2013**
(21) Application number: 13166387.4
(22) Date of filing: 03.05.2013
(51) Int. Cl.: H04R 25/00, H04R 1/10

(54) **A system and apparatus for controlling a device with a bone conduction transducer**

(30) Priority: 03.05.2012 US 201261641916 P
(71) Applicant: DSP Group Inc., 46725 Herzelia (IL)
(72) Inventor: Yeduday, Uri, 5964211 Bat Yam (IL); Heiman, Arie, 4493500 Sde Warburg (IL)
(74) Representative: Modiano, Micaela Nadia

(57) **Abstract**

A mobile communication device that may include a vibration sensor that is arranged to detect vibrations; an instruction generator that is coupled to the vibration sensor and is arranged to: detect a pattern in said vibrations caused by a user contact with either the mobile communication device or a head of the user, and translate said pattern into a set of instructions that is associated with the pattern and is to be executed by the mobile communication device.

## Description

### RELATED APPLICATIONS

This application claims the priority of US provisional patent serial number61/641,916 filing date May 3 2012 which is incorporated herein by reference.

### FIELD OF THE INVENTION

The present invention relates to bone conduction microphones generally and to controlling devices in particular.

### BACKGROUND OF THE INVENTION

The use of mobile communication and entertainment devices,such as mobile phones, tablets and portable music devices has become very popular. To listen to the content, some users prefer to use a wire or wireless headsetor earpiece,such as a Bluetooth mono or stereo headset. These headsets and mobile phones typically include control keys for functionality, such as unlock the mobile phone ,answering/ending a call, adjusting volume level and muting/ un-muting etc. To meet these different functionalities and others, such asbalancing the speakers,moving through songs etc., different buttons are required. Due to the limitations of size of the device in use, the buttons provided are often very small and often have multiple functionalitiesas defined by the time duration or the sequence that the user presses.

Since all this selection and adjusting is often done 'blindly' with the headset already in place, or the mobile phone that are located in the user pocket , often the wrong button is activated. This may especially be problematic with buttons that are invisible to the user, such as those ina Bluetooth earpiece.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 is a schematic illustration of system providing input to an earpiece constructed and operative in accordance with the present invention,

Fig.2 is a block diagram illustration of the elements forming the system of Fig. 1, constructed and operative in accordance with the present invention,

Fig. 3 is an exemplary signal of three knocks that may be recognized by bone conduction microphone constructed and operative in accordance with the present invention,

Fig. 4 is an exemplary lookup table constructed and operative in accordance with the present invention,

Fig. 5 is a schematic illustration of an alternative embodiment of Fig.1 constructed and operative in accordance with the present invention,

Fig. 6 is a schematic illustration of a bone conduction microphone embedded in a mobile communication device constructed and operative in accordance with the present invention,

Fig. 7 is a diagram of the hardware ofFig. 6, constructed and operative in accordance with the present invention; and

Fig. 8 is a schematic illustration of a method in accordance with the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### SUMMARY

According to an embodiment of the invention there is provided a mobile communication device that comprises a vibration sensor embedded in a housing of said mobile communication device, said vibration sensor for detecting vibrations; an instruction generator to detect a pattern in said vibrations caused by a user's patterned contact with either said housing or said user's head and to translate said pattern into a set of instructions to said device according to a pre-determined look up table; and an operating system to receive said set of instructions and to control said mobile communication device accordingly. The set of instructions may include one or more instructions.

The vibration sensor may be a bone conduction microphone.

According to an embodiment of the invention there may be provided a method for controlling a mobile communication device, said method may include: detecting with a vibration sensor, vibrations caused by a user's patterned contact with said mobile communication device or said user's head; processing predefined patterns of said vibrations using a predefined lookup table of instructions and determining an associated instruction; and providing the determined instruction to the operating system of said mobile communication device.

The vibration sensor may be a bone conduction microphone.

According to an embodiment of the invention there may be provided a mobile communication device, the device may include a vibration sensor that is arranged to detect vibrations; an instruction generator that is coupled to the vibration sensor and is arranged to: detect a pattern in said vibrations caused by a user contact with either the mobile communication device or a head of the user, and translate said pattern into a set of instructions that is associated with the pattern and is to be executed by the mobile communication device.

The mobile communication device may include an operating system that is arranged to receive the set of instructions and to control said mobile communication device accordingly.

The instruction generator may be arranged to receive or generate a lookup table that associates patterns to sets of at least one instruction.

The vibration sensor may be a bone conduction microphone.

The vibration sensor may be embedded within an earpiece.

The mobile communication device may be a mobile phone and the vibration sensor is embedded within the mobile phone.

The vibration sensor may be embedded in a front screen panel of the mobile communication device.

The vibration sensor may be embedded in a backside of the mobile communication device.

The instruction generator may be arranged to sense the pattern in vibrations induced by a tapping of the user on the head of the user or on the mobile communication device.

The instruction generator may be arranged to sense the pattern in vibrations induced by a scratching of the user of the head of the user or of the mobile communication device.

The pattern of a scratching may include a direction of the scratching by the user.

The instruction generator may be arranged to generate an instruction to lower a first characteristic of an operation of the mobile communication device if detecting a scratching along a first direction and to generate an instruction to decrease the first characteristic of the operation of the mobile communication device if detecting a scratching along a second direction that is substantially opposite to the first direction.

The instruction generator may be arranged to generate an instruction to lower a second characteristic of an operation of the mobile communication device if detecting a scratching along a thirddirection and to generate an instruction to decrease the second characteristic of the operation of the mobile communication device if detecting a scratching along a fourth direction that is substantially opposite to the third direction and is not-parallel to the first direction.

The instruction generator may be responsive to at least two parameters out of: a length of a scratching or tapping, a direction of the scratching or tapping and to an intensity of the scratching or tapping.

The instruction generator may be responsive to a length of a scratching or tapping, a direction of the scratching or tapping and to an intensity of the scratching or tapping.

The mobile communication device may include a housing that comprises a converter for converting a contact of a user to a series of vibrations. The converter may include a selection of pits.

According to an embodiment of the invention there may be provided a method for controlling a mobile communication device, the method may include:detecting vibrations by a vibration sensor; detecting a pattern in said vibrations caused by a user contact with either the mobile communication device or a head of the user; andtranslating said pattern into a set of instructions that is associated with the pattern and is to be executed by the mobile communication device.

The method may include controlling the mobile communication device by executing the set of instructions.

According to an embodiment of the invention there may be provided a non-transitory computer readable medium that stores instructions for receiving detection signals indicative of vibrations that are sensed by a vibration sensor of a mobile communication device; detecting a pattern in said vibrations caused by a user contact with either the mobile communication device or a head of the user; and translating said pattern into a set of instructions that is associated with the pattern and is to be executed by the mobile communication device.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

Bone conduction is the conduction of sound to the inner ear through the bones of the skull. Bone conduction transducers or microphones are known in the art as devices for converting the vibration signal that is picked up from the bone into an analogor digital voice signal.The resultantsignal may be further processed and used accordingly. It will be appreciated that a bone conduction microphone can be embedded in any devicethat directly touches the skullor the head.

Applicants have realized that this technology may be useful for controlling mobile phones, headsets and earpieces, such as those described hereinabove, when suitably embedded. Applicants have further realized that this technology may also be adapted for any form of headgear that sits in direct contact with the head and where a bone conduction microphone may be embedded.

It will be appreciated that any digitally controlled headpiece or earpiece may be used. The present discussion presents examples using a Bluctooth earpiece.

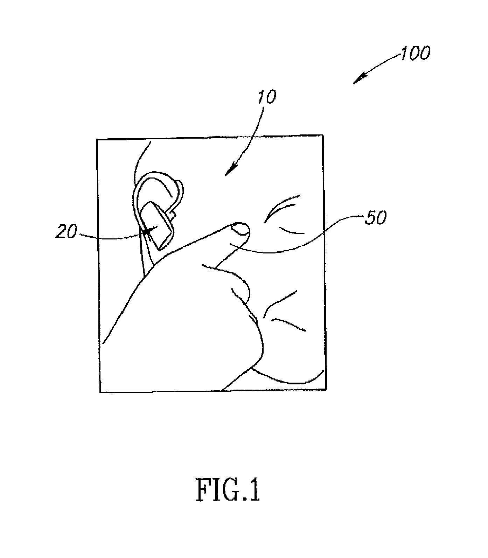

Reference is now made to Fig.1 which illustrates a system 100 for providing input to an earpiece, such as a typical Bluetooth earpiece 20. When user 10 taps the side of his head using his finger 50, he may set off a pattern of pulses which may vibrate throughout his skull.

It will be appreciated that user 10 may knock or scratch his head at any location.

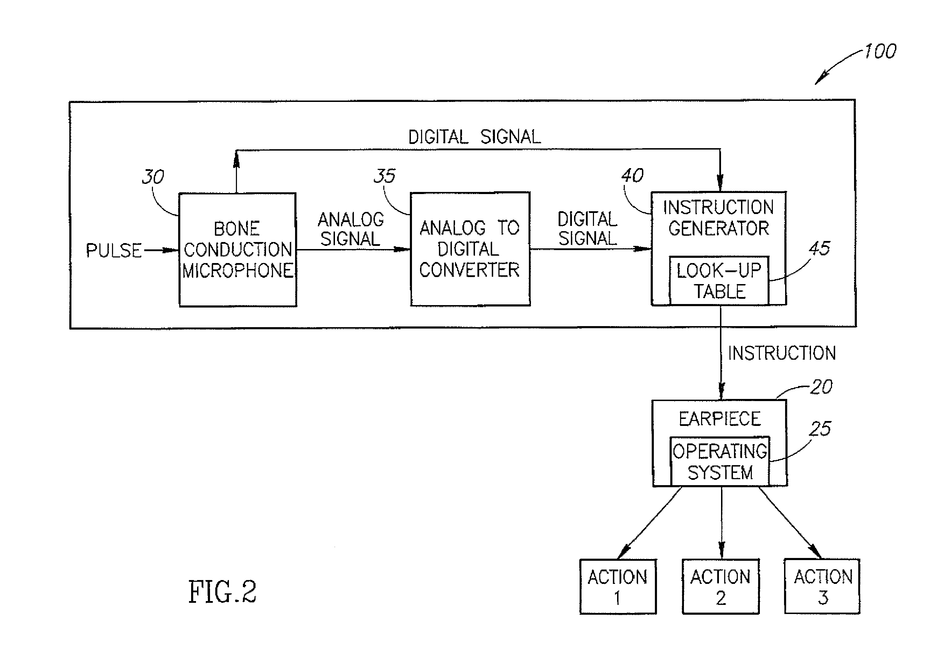

Reference is now made to Fig.2 which shows a block diagram of the elements of system 100, constructed and operative in accordance with a preferred embodiment of the present invention. System 100 may comprise bone conduction microphone 30, an analog to digital convertor 35 and an instruction generator 40 and may provide instructions to an operating system 25 of earpiece 20. System 100 may provide instructions from a user to a headpiece or an earpiece, such as earpiece 20.

Bone conduction microphone 30, which may be embedded within earpiece 20 and may touch the head (and therefore the skull) of user 10, may pick up the pulses of the vibration that pass through the skull when user 10 taps his head and may convert them into an analog signal and/or a digital signal. If required, the analog signal may then be digitized by analog to digital convertor 35 with appropriate amplification. The digital signal produced may be furtherreceived and analyzed by instruction generator 40 which may use a lookup table 45 to interpret the desired action according to the pattern of the pulsesin the received signal. Instruction generator 40 may then instruct operating system25 which in turn may instruct earpiece 20 to function according to the required action, such as answering a phone call or playing music.

It will be appreciated that instruction generator 40 may also be embedded as part of operating system 25.

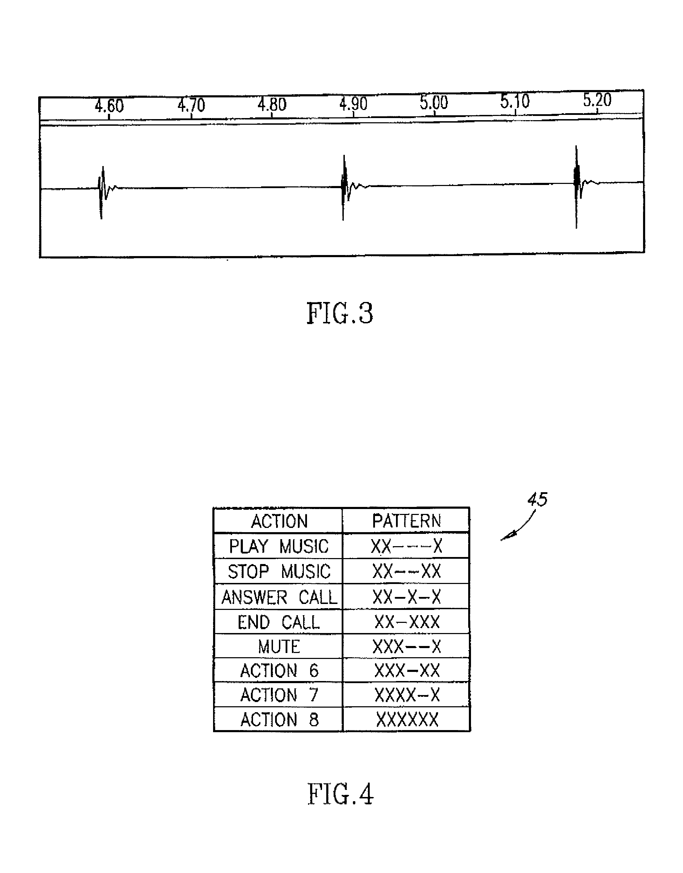

Reference is now made to Fig. 3 which illustrates an exemplary signal of three knocks that may be recognized by bone conduction microphone 30.In Fig. 3, the knocks are approximately 0.3 seconds apart though this is exemplary. System 100 may recognize these knocks and may compare the pattern of knocks with preset patterns assigned to instructions for earpiece 20.

Reference is now made to Fig. 4 which illustrates an example of lookup table 45. As mentioned above, the different functionalities of earpiece 20 may be associated with predefined patterns of pulses. In the table "x" represents a single tap and "-"represents a pause. For example, user 10 may tap his head twice quickly, pause and then tap once again. The pattern "xx---x" may be assigned to the action "play music". The lockup table may be programmed or otherwise embedded in the mobile communication device. Alternatively, the user can build the mapping included in the lookup table or update the lookup table by entering the mobile communication device into a learning mode. This (entering into learning mode) can require pressing a button or may be based upon at least one predefined pattern already known to the mobile communication device.

It is noted that the lookup table is only one example for mapping (or associating) between patterns and instructions. Any other mapping can be used. For example, the mapping can be implemented by using a mathematical function.

It will be appreciated that user 10 may touch or knock his head, or even his teeth, unintentionally, and instruction generator 40 may still interpret the knocking as a valid command, which may generate a false action.To reduce the false action probability, the defined patterns need to be unique, i.e. patterns that are not likely to be done by user 10 subconsciously or as part of his daily routine.A solution may be to start each pattern with two taps.It will be further appreciated that if instruction generator 40 does not find a pattern match within a predetermined length of time, it will return a false negative and no function is activated.

In an alternative embodiment of the present invention, user 10 may use a drawn out contact with his head, such as a scratch,for further functionality. The pattern of vibrations created may also be detected by bone conduction microphone 30 and may be analyzed by instruction generator 40 to identify the desired functionality as described hereinabove. It will be appreciated that the signal generated by a scratch may differ from those generated by a tap and may last for a longer length of time. Lockup table 45 may be adjusted accordingly to interpret these signals. A direction of a scratching can be detected and interpreted as a pattern. It will be further appreciated that the sliding action of a scratch may also be interpreted as a volume slider. If the movement of an upward scratch is distinguishable from the movement of a downward scratch, the resulting actions may be used to increase and decrease volume. Volume may be increased or decreased linearly in correlation with the length of time finger 50 is in contact with the head.

It will be further appreciated that user 10 may also tapearpiece 20 instead of his head to instructit.The resultant vibrations may also be detected by bone conduction microphone 30 (typically housed in the earpiece being tapped) and analyzed by instruction generator40to identify the desired command as described hereinabove.

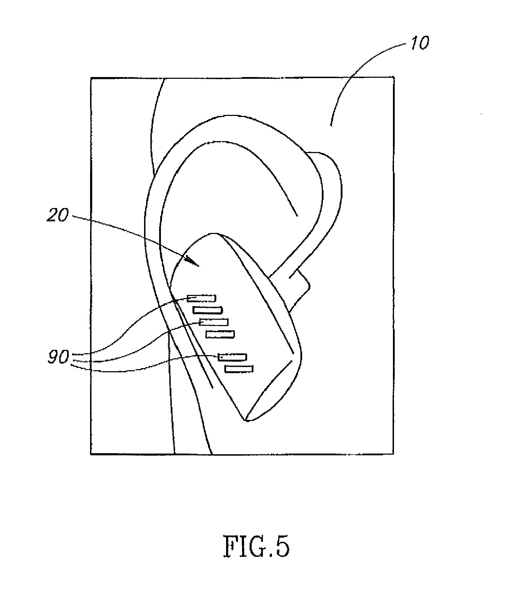

Reference is now made to Fig. 5 which illustrates the front panel of a Bluetooth earpiece20 comprising a selection of pits 90. In an alternative embodiment of the present invention, instead of scratching his head, user 10 may slide his finger 50 over pits 90. The jerky movementof finger 50 over pits 90 may also generate a pattern of vibrations similar to the tapping described hereinabove.The resultant vibrations may also be detected by bone conduction microphone 30 and processed as described hereinabove. It will be appreciated that running finger 50 over pits 90 may also be interpreted by lookup table 45 in the same manner as a scratch in order to increase and decrease volume.

It will be further appreciated that this method of controlling earpiece 20 by "tapping" and "scratching" the head may override the necessity to use the buttons and switches of an earpiece.

Applicant has further realized that this method of controlusing "tapping" and "scratching" may also be used to control a pertinent device directly (such as a mobile phone) when implemented accordingly, without using any intermediate apparatus such as a Bluetooth earpiece. For example, Applicant has realized that this method may be implemented on a touch screen mobile communication device, such as an iPhone, commercially available from Apple Inc. or an Android driven smart phone, such as a Samsung Galaxy, commercially available from Samsung Inc., In this embodiment, a bone conduction microphone may be implemented in such a mobile communication device in a manner similar to that described in US provisional patent application61/605,287filed 01 March2012, assigned to the common assignee of the present application and incorporated herein by reference.

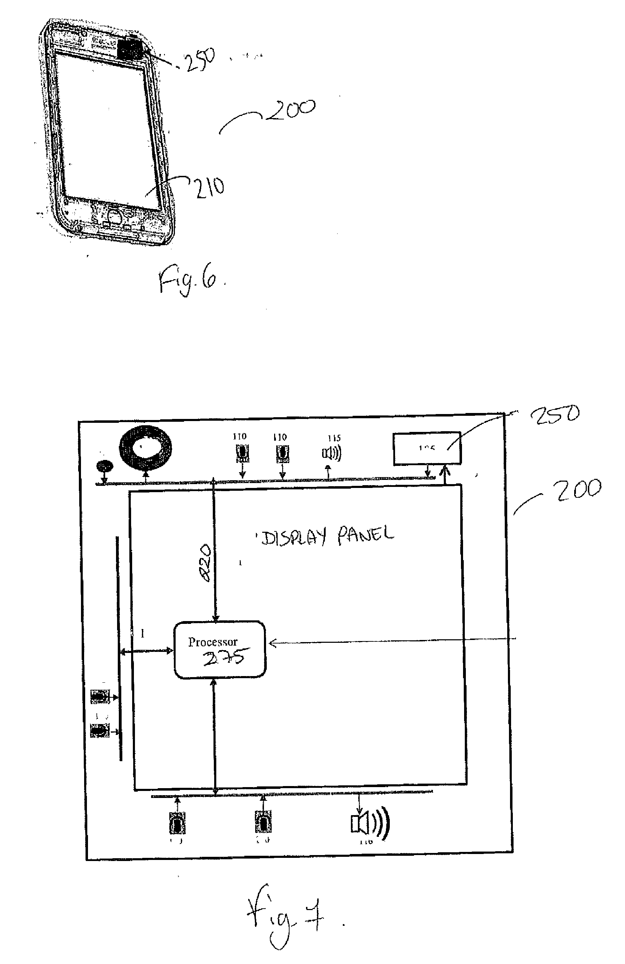

Reference is now made to Fig. 6 which illustrates a standard mobile communication device (such as a mobile phone) 200 with a bone conduction microphone 250 embedded therein. It will be appreciated that bone conduction microphone 250 may be embedded in the phone as part of the front screen panel 210 or behind the panel attached to it or in any location of the phone that has mechanical connection with the panel and capable to sense the vibration generated by the user on the phone.

It will be further appreciated that,when mobile communication device 200 is held to the ear, the part of the screen panel210 containing bone conduction microphone 250 may rest against the side of the head. Thus,bone conduction microphone 250may be in direct contact with the skull and instructions may be given by tapping the side of the head as described hereinabove.

Alternatively as also described hereinabove, embedded bone conduction microphone 250 may also register vibrations caused from tapping the outer housingof mobile communication device 200. Therefore, by simply tapping device 200 according to a pre-defined lookup table, a user may control device 200 without having to locate a correct touch point on the screen or a combination of keys. For example, a mobile phone located in a pocket or bag that may start to ring at an inconvenient time, such as in a meeting, may be tapped to mute it without having to retrieve it, or a phone call may easily answered whilst driving.

In an alternative embodiment to the current invention, bone conduction microphone 250 may also be embedded in the rear part of device 200. Although this embodiment may limit the ability to control device 200 by tapping etc. the head, device 200 may still be controlled by tapping its outer housing as described hereinabove.

Reference is now made to Fig. 7, which illustrates a typical mobile communication device 200 comprising an embedded bone conduction microphone 250 and a processor 275. Any vibrations picked up by bone conduction microphone 250 either by tapping the head or by tapping device 200 may be transmitted to processor 275 via analog or digital connection 220.

It will further be appreciated that processor 275 may comprise an instruction generator 40 (as described hereinabove) which may, in turn, include a look-up table 45 functionally similar to the lookup table described with respect to Fig. 4. Processor 275 may then instruct the operating system of device 200 accordingly. It will be appreciated that processor 275 may also be part of the operating system of device 200.

As also described hereinabove, functionality may not only be restricted to tapping. Scratching the head or a ridged backing on device 200 with pits similar to that as illustrated in Fig.5 may also be used to provide instructions, such as increase/decrease volume etc.

It will be also appreciated that the practice of the tapping, scratching etc. to control device 200 may be used in conjunction with the existing functionality of device 200 to provide even further functionality. For example, many advanced mobile communication devices have voice recognition capabilities which may be used to provide instructions orally to device 200. It will be appreciated that user 10 may not use voice recognition mid conversation without significantly pausing the conversation to manually activate the voice recognition mode.In accordance with an embodiment of the present invention, user 10 may tapdevice200 (or head) accordingly during a conversation in order to activate voice recognition modewithout removing the device 200 from his ear. Once voice recognition mode has been activated, user 10 may use it to increase functionality such as to verbally instruct device 200 to add other callers from his address book to his conversation.

It will be further appreciated that ability to control operation by tapping etc. the head through the use of bone conduction microphones in conjunction with processors may not be limited to such headpieces or devices as described hereinabove.Bone conduction microphones, due to their small size, may also be embedded in any form of accessory that touches the skull, such as different forms of headgear and spectacles. For example, when teamed up with an appropriate processor, a head torch may be controlled by tapping the head.

It will also be appreciated that any form of suitable vibration sensor may be used in place of a bone conduction microphone.

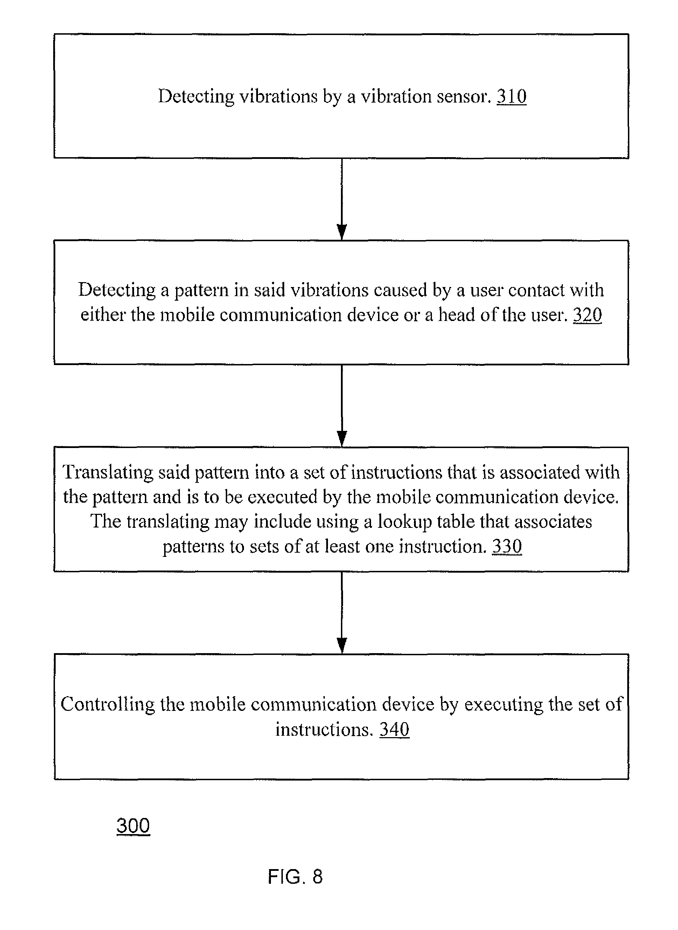

Fig. 8 illustrates method 300 according to an embodiment of the invention.

Method 300 starts by stage 310 of detecting vibrations by a vibration sensor.

Stage 310 may be followed by stage 320 of detecting a pattern in said vibrations caused by a user contact with either the mobile communication device or a head of the user.

The patterns may be cause by having the user tap his head or the mobile communication device, scratch his head or the mobile communication device or perform any movement that will induce vibrations according to a desired pattern.

The detection of a pattern may include detecting time gaps between vibrations, detecting the number of vibrations induced during a predetermined period of time, detecting the direction of a movement that caused the vibrations, detecting the strength of vibrations and the like.

The detection of the pattern may include detecting a direction of scratching. Different directions may be translated to different instructions.

Stage 320 may be followed by stage 330 of translating said pattern into a set of instructions that is associated with the pattern and is to be executed by the mobile communication device. The translating may include using a lookup table that associates patterns to sets of at least one instruction.

For example, the translating may include generating an instruction to lower a first characteristic of an operation of the mobile communication device if detecting a scratching along a first direction and to generating an instruction to decrease the first characteristic of the operation of the mobile communication device if detecting a scratching along a second direction that is substantially opposite (for example within an angular range of between 150 and 210 degrees) of to the first direction.

Yet for another example, the translating may include generating an instruction to lower a second characteristic of an operation of the mobile communication device if detecting a scratching along a third direction and generating an instruction to decrease the second characteristic of the operation of the mobile communication device if detecting a scratching along a fourth direction that is substantially opposite to the third direction and is not-parallel to the first direction (for example- is about 60 to 120 degrees offset).

The translating may be responsive to at least two parameters out of: a length of a scratching or tapping, a direction of the scratching or tapping and to an intensity of the scratching or tapping.

Stage 330 may be followed by stage 340 of controlling the mobile communication device by executing the set of instructions. The controlling may include changing a characteristic of operation of the mobile communication device (change sound level, change an equalizer setting, change a display of information, skip between media items, answer a phone call, skip between operational mode of operation and the like) or performing ally control operation that may affect the manner in which the mobile communication operates.

The mobile communication device may include an operating system and stage 340 may include receiving the set of instructions by the operating system and controlling said mobile communication device by the operating system in accordance with the set of instructions.

Unless specifically stated otherwise, as apparent from thepreceding discussions, it is appreciated that, throughout the specification, discussions utilizing terms such as "processing," "computing," "calculating," "determining," or the like, refer to the action and/or processes of a computer, computing system, or similar electronic computing device that manipulates and/or transforms data represented as physical, such as electronic, quantitieswithin the computing system's registers and/or memories into other data similarly represented as physical quantities within the computing system's memories, registers or other such information storage, transmission or display devices.

Embodiments of the present invention may include apparatus for performing the operations herein.This apparatus may be specially constructed for the desired purposes, or it may comprise a general-purpose computer selectively activated or reconfigured by a computer program stored in the computer.Such a computer program may be stored in a computer readable storage medium, such as, but not limited to, any type of disk, including floppy disks, optical disks, magnetic-optical disks, read-only memories (ROMs), compact disc read-only memories (CD-ROMs), random access memories (RAMs), electrically programmable read-only memories (EPROMs), electrically erasable and programmable read only memories (EEPROMs), magnetic or optical cards, Flash memory, or any other type of media suitable for storing electronic instructions and capable of being coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the desired method.The desired structure for a variety of these systems will appear from the description below.In addition, embodiments of the present invention are not described with reference to any particular programming language.It will be appreciated that a variety of programming languages may be used to implement the teachings of the invention as described herein.

In the foregoing specification, the invention has been described with reference to specific examples of embodiments of the invention. It will, however, be evident that various modifications and changes may be made therein without departing from the broader spirit and scope of the invention as set forth in the appended claims.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Although specific conductivity types or polarity of potentials have been described in the examples, it will be appreciated that conductivity types and polarities of potentials may be reversed.

Each signal described herein may be designed as positive or negative logic. In the case of a negative logic signal, the signal is active low where the logically true state corresponds to a logic level zero. In the case of a positive logic signal, the signal is active high where the logically true state corresponds to a logic level one. Note that any of the signals described herein may be designed as either negative or positive logic signals. Therefore, in alternate embodiments, those signals described as positive logic signals may be implemented as negative logic signals, and those signals described as negative logic signals may be implemented as positive logic signals.

Furthermore, the terms "assert" or "set" and "negate" (or "dessert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures may be implemented which achieve the same functionality.

Any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements The mere fact that certain measures are recited in mutually different claims does not indicate that a combination of these measures cannot be used to advantage.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. Amobile communication device, the device comprising:
avibration sensorthat is arranged to detect vibrations;
an instruction generator that is coupled to the vibration sensor and is arranged to:
detect a pattern in said vibrations caused by a user contact with either the mobile communication device or a head of the user,and
translate said pattern into a set of instructions that is associated with the pattern and is to be executed by the mobile communication device.

2. The mobile communication device according to claim 1, comprising an operating system that is arranged to receive the set of instructions and to control said mobile communication device accordingly.

3. The mobile communication device according to claim 1, wherein the instruction generator is arranged to receive or generate a lookup table that associates patterns to sets of instructions.

4. The mobile communication device according to claim 1, wherein the vibration sensor is a bone conduction microphone.

5. The mobile communication device according to claim 1, wherein the vibration sensor is embedded within an earpiece.

6. The mobile communication device according to claim 1, wherein the mobile communication device is a mobile phone and the vibration sensor is embedded within the mobile phone.

7. The mobile communication device according to claim 1, wherein the vibration sensor is embedded in a front screen panel of the mobile communication device.

8. The mobile communication device according to claim 1, wherein the vibration sensor is embedded in a backside of the mobile communication device.

9. The mobile communication device according to claim 1, wherein the instruction generator is arranged to sense the pattern in vibrations induced by a tapping of the user on the head of the user or on the mobile communication device.

10. The mobile communication device according to claim 1, wherein the instruction generator is arranged to sense the pattern in vibrations induced by a scratching of the user of the head of the user or of the mobile communication device.

11. The mobile communication device according to claim 10, wherein the pattern of a scratching comprises a direction of the scratching by the user.

12. The mobile communication device according to claim 11, wherein the instruction generator is arranged to generate an instruction to lower a first characteristic of an operation of the mobile communication device if detecting a scratching along a first direction and to generate an instruction to decrease the first characteristic of the operation of the mobile communication device if detecting a scratching along a second direction that is substantially opposite to the first direction.

13. The mobile communication device according to claim 12, wherein the instruction generator is arranged to generate an instruction to lower a second characteristic of an operation of the mobile communication device if detecting a scratching along a thirddirection and to generate an instruction to decrease the second characteristic of the operation of the mobile communication device if detecting a scratching along a fourth direction that is substantially opposite to the third direction and is not-parallel to the first direction.

14. The mobile communication device according to claim 10, wherein the instruction generator is responsive to at least two parameters out of: a length of a scratching or tapping, a direction of the scratching or tapping and to an intensity of the scratching or tapping.

15. A method for controlling a mobile communication device, the method comprises:
detecting vibrations by a vibration sensor;
detecting a pattern in said vibrations caused by a user contact with either the mobile communication device or a head of the user; and
translating said pattern into a set of instructions that is associated with the pattern and is to be executed by the mobile communication device.
